# FASCICULE DE BREVET EUROPEEN

(11) **EP 4 292 062 B1**
(45) Date de publication et mention de la délivrance du brevet: **06.05.2026**
(21) Numéro de dépôt: 22708200.5
(22) Date de dépôt: 10.02.2022
(51) Int. Cl.: G06V 40/16

(54) **PROCÉDÉ D'APPRENTISSAGE D'UN SYSTÈME D'APPRENTISSAGE AUTOMATIQUE POUR LA DÉTECTION ET LA MODÉLISATION D'UN OBJET DANS UNE IMAGE, PRODUIT PROGRAMME D'ORDINATEUR ET DISPOSITIF CORRESPONDANT**
LERNVERFAHREN FÜR EIN MASCHINENLERNSYSTEM ZUR ERKENNUNG UND MODELLIERUNG EINES OBJEKTS IN EINEM BILD, ENTSPRECHENDES COMPUTERPROGRAMMPRODUKT UND VORRICHTUNG
LEARNING METHOD FOR A MACHINE LEARNING SYSTEM FOR DETECTING AND MODELLING AN OBJECT IN AN IMAGE, CORRESPONDING COMPUTER PROGRAM PRODUCT AND DEVICE

(30) Priorité: 11.02.2021 FR 2101319
(43) Date de publication de la demande: 20.12.2023
(73) Titulaire: Fittingbox, 31670 Labege (FR)
(72) Inventeur: NATUREL, Xavier, 31320 Auzeville-Tolosane (FR); CHOUKROUN, Ariel, 31650 Saint Orens de Gameville (FR)
(74) Mandataire: Santarelli
(86) Numéro de dépôt international: PCT/FR2022/050240
(87) Numéro de publication internationale: WO 2022/171960

(56) Documents cités:
- US-A1- 2018 005 448
- WANG YATING ET AL: "Eyeglasses 3D Shape Reconstruction from a Single Face Image", 20 November 2020, ADVANCES IN INTELLIGENT DATA ANALYSIS XIX; [LECTURE NOTES IN COMPUTER SCIENCE; LECT.NOTES COMPUTER], PAGE(S) 372 - 387, ISBN: 978-3-540-35470-3, ISSN: 0302-9743, XP047593582
- YUAN XIAOYUN ET AL: "Magic Glasses: From 2D to 3D", IEEE TRANSACTIONS ON CIRCUITS AND SYSTEMS FOR VIDEO TECHNOLOGY, INSTITUTE OF ELECTRICAL AND ELECTRONICS ENGINEERS, US, vol. 27, no. 4, 1 April 2017 (2017-04-01), pages 843 - 854, XP011644787, ISSN: 1051-8215, [retrieved on 20170403], DOI: 10.1109/TCSVT.2016.2556439

## Description

### Domaine de l'invention

Le domaine de l'invention est celui du traitement d'image.

L'invention se rapporte plus particulièrement à une méthode de détection et de modélisation d'un objet et/ou d'une zone caractéristique (e.g. des yeux, un nez, etc.) détecté(s) dans une image.

L'invention a de nombreuses applications, notamment, mais non exclusivement, pour l'essayage virtuel d'une paire de lunettes.

### Art antérieur et ses inconvénients

On s'attache plus particulièrement dans la suite de ce document à décrire une problématique existante dans le domaine de l'essayage virtuel d'une paire de lunettes à laquelle ont été confrontés les inventeurs de la présente demande de brevet. L'invention ne se limite bien sûr pas à ce domaine particulier d'application, mais présente un intérêt pour la détection et la modélisation de tout type d'objet représenté dans une image et/ou de tout type de zone caractéristique (i.e. une partie d'intérêt de l'image) d'une telle image.

Il est connu de l'art antérieur d'utiliser des points caractéristiques de certains objets et/ou de certaines zones caractéristiques afin de détecter les objets et/ou les zones caractéristiques en question. Par exemple, le coin des yeux est classiquement utilisé comme point caractéristique permettant de détecter les yeux d'un individu dans une image. D'autres points caractéristiques peuvent également être envisagés pour la détection d'un visage, tels que le nez ou le coin de la bouche. La qualité de la détection du visage est généralement fonction du nombre et de la position des points caractéristiques utilisés. De telles techniques sont notamment décrites dans le brevet français publié sous le numéro FR 2955409 et dans la demande internationale de brevet publiée sous le numéro WO 2016/135078, de la société déposant la présente demande de brevet.

Concernant un objet manufacturé, des arrêtes ou coins peuvent par exemple être envisagés en tant que points caractéristiques.

Cependant, l'utilisation de tels points caractéristiques peut conduire à un manque de précision dans la détection, et donc dans la modélisation des objets et/ou zones caractéristiques en question le cas échéant.

Alternativement, une annotation manuelle des images est parfois envisagée afin de générer artificiellement les points caractéristiques des objets et/ou des zones caractéristiques considéré(e)s. Cependant, là encore il est constaté un manque de précision dans la détection des objets et/ou zones caractéristiques en question. Le cas échéant, une telle imprécision peut conduire à des problèmes de modélisation des objets et/ou zones caractéristiques ainsi détecté(e)s.

WANG YATING ET AL: "Eyeglasses 3D Shape Reconstruction from a Single Face Image", 20 novembre 2020 (2020-11-20), ADVANCES IN INTELLIGENT DATA ANALYSIS XIX; [LECTURE NOTES IN COMPUTER SCIENCE; LECT.NOTES COMPUTER], PAGE(S) 372 - 387, divulgue un système automatique qui récupère la forme 3D des lunettes à partir d'une seule image du visage avec une pose arbitraire de la tête. Pour atteindre cet objectif, on entraîne d'abord un réseau neuronal à effectuer conjointement la détection et la segmentation des repères des lunettes, qui transportent les informations sur la forme des lunettes.

YUAN XIAOYUN ET AL: "Magic Glasses: From 2D to 3D",IEEE TRANSACTIONS ON CIRCUITS AND SYSTEMS FOR VIDEO TECHNOLOGY, INSTITUTE OF ELECTRICAL AND ELECTRONICS ENGINEERS, US, vol. 27, no. 4, 1 avril 2017 (2017-04-01), pages 843-854, divulgue un système virtuel d'essayage de lunettes en 3D basé sur une image Internet en 2D d'un visage humain portant une paire de lunettes.

Il existe ainsi un besoin pour une technique permettant de détecter et de modéliser de manière précise un (ou plusieurs) objet représenté dans une image et/ou une (ou plusieurs) zone caractéristique présente dans l'image en question.

### Exposé de l'invention

Dans un mode de réalisation de l'invention, il est proposé un procédé d'apprentissage d'un système d'apprentissage automatique pour la détection et la modélisation d'au moins un objet représenté dans au moins une image donnée et/ou d'au moins une zone caractéristique de ladite au moins une image donnée. Selon un tel procédé, le système d'apprentissage automatique effectue :
- une génération d'une pluralité d'images de réalité augmentée comprenant une image réelle et au moins un élément virtuel représentatif dudit au moins un objet et/ou de ladite au moins une zone caractéristique ;
- une obtention, pour chaque image de réalité augmentée, d'informations d'apprentissage comprenant, pour au moins un élément virtuel donné de l'image de réalité augmentée :
   - un modèle de segmentation de l'élément virtuel donné obtenu à partir de l'élément virtuel donné, et
   - soit un ensemble de points de contour correspondant à une paramétrisation de l'élément virtuel donné, soit ladite paramétrisation, obtenu(e) à partir dudit élément virtuel donné ; et
- un apprentissage à partir de la pluralité d'images de réalité augmentée et des informations d'apprentissage, délivrant un jeu de paramètres mettant le système d'apprentissage automatique en capacité de détecter ledit au moins un objet et/ou ladite au moins une zone caractéristique dans ladite au moins une image donnée et à déterminer des informations de modélisation correspondantes comprenant :
   - un modèle de segmentation dudit au moins un objet et/ou de ladite au moins une zone caractéristique, et
   - soit un ensemble de points de contour correspondant à une paramétrisation dudit au moins un objet et/ou de ladite au moins une zone caractéristique, soit ladite paramétrisation.

Ainsi, l'invention propose une solution nouvelle et inventive pour entrainer un système d'apprentissage automatique (e.g. un réseau neuronal convolutif) de sorte à le mettre en capacité de détecter un (ou plusieurs) objet (e.g. une paire de lunettes) et/ou une (ou plusieurs) zone caractéristique (e.g. le contour des yeux ou le contour de l'iris des yeux) dans une image donnée (e.g. une image représentant le visage d'une personne portant des lunettes) et déterminer des informations de modélisation correspondantes.

Plus particulièrement, l'apprentissage se fait à partir d'images de réalité augmentée comprenant des éléments virtuels représentatifs de l'objet (ou des objets) et/ou de la zone caractéristique (ou des zones caractéristiques). Ainsi, la segmentation (e.g. via un masque binaire de l'objet et/ou de la zone caractéristique simulé(s) par le (ou les) éléments virtuels) et la distribution des points sur le contour sont réalisées avec précision. Ceci permet de résoudre, par exemple, l'ambigüité inhérente à l'annotation manuelle de tels points. Par exemple, la distribution des points correspond à une paramétrisation 2D ou 3D de l'objet (e.g. un modèle 3DMM, ou « 3D Morphable Model » en anglais) et/ou de la zone caractéristique simulé(s) par le (ou les) éléments virtuels. De la sorte, l'annotation est précise et il est aisé de remonter à la paramétrisation à partir des points de contour.

Par ailleurs, l'utilisation de tels éléments virtuels permet de résoudre les problèmes d'occultations, et donc d'éviter d'obtenir une annotation incomplète, comme ce pourrait être le cas avec la fin des branches de lunettes occultées par les oreilles, ou avec l'iris qui est occulté par la paupière. Le mélange entre des données réelles (images) et des objets virtuels permet de spécialiser le système d'apprentissage automatique à des cas réels d'application. Les images de réalité augmentée offrent ainsi le meilleur compromis entre le réalisme de l'image et la facilité de production d'images et d'annotations avec suffisamment de variabilité.

Dans des modes de réalisation, pour chaque image de réalité augmentée, l'apprentissage du système d'apprentissage automatique comprend un apprentissage conjoint à partir du modèle de segmentation de l'élément virtuel donné et de l'ensemble de points de contour correspondant à une paramétrisation de l'élément virtuel donné.

Ainsi, un effet de synergie est obtenu pour l'apprentissage du système d'apprentissage automatique, l'apprentissage du modèle de segmentation et l'apprentissage de l'ensemble de points de contour se renforçant mutuellement. Le modèle de segmentation permet d'améliorer la précision en maximisant le nombre de pixels de l'objet virtuel détectés correctement (i.e. en minimisant le nombre de pixels détectés à tort comme appartenant à l'objet). Par ailleurs, l'ensemble des points ainsi détectés correspond à une forme cohérente de l'objet. Cette cohérence est dans le cas présent renforcée par le fait que les points viennent d'un modèle paramétrique. Ainsi, une forme cohérente de l'objet est obtenue quelle que soit la position de la caméra ayant pris l'image réelle et quelle que soit la pose de l'objet dans l'image de réalité augmentée.

Dans des modes de réalisation, l'apprentissage conjoint met en œuvre une fonction de coût fonction d'une combinaison linéaire entre une entropie croisée associée au modèle de segmentation de l'élément virtuel donné et une distance euclidienne associée à l'ensemble de points de contour correspondant à une paramétrisation de l'élément virtuel donné.

Par exemple, le système d'apprentissage automatique comprend une branche pour l'apprentissage du modèle de segmentation et une branche pour l'apprentissage de l'ensemble de points de contour. L'entropie croisée est ainsi associée à la branche pour l'apprentissage du modèle de segmentation et une distance euclidienne est associée à la branche pour l'apprentissage de l'ensemble de points de contour.

Dans des modes de réalisation, l'image réelle comprend la représentation d'un visage. Les informations d'apprentissage comprennent, pour au moins un point de contour de l'ensemble de points de contour correspondant à une paramétrisation de l'élément virtuel donné, une information de visibilité indiquant si le point de contour est visible ou s'il est occulté par le visage.

Ainsi, la visibilité des points de contour est prise en compte.

Dans des modes de réalisation, la fonction de coût est en outre fonction d'une entropie croisée binaire associée à la visibilité du point de contour.

Dans des modes de réalisation, les informations d'apprentissage comprennent la paramétrisation dudit élément virtuel donné.

Ainsi, le système d'apprentissage automatique est mis en capacité de délivrer directement la paramétrisation en question.

L'invention concerne également un procédé de détection et de modélisation d'au moins un objet représenté dans au moins une image et/ou d'au moins une zone caractéristique de ladite au moins une image. Un tel procédé de détection et de modélisation est mis en œuvre par un système d'apprentissage automatique entrainé par mise en œuvre du procédé d'apprentissage décrit ci-dessus (selon l'un quelconque des modes de réalisation précités). Selon un tel procédé de détection et de modélisation, le système d'apprentissage automatique effectue une détection dudit au moins un objet et/ou de ladite au moins une zone caractéristique dans ladite au moins une image et effectue une détermination d'informations de modélisation dudit au moins un objet et/ou de ladite au moins une zone caractéristique.

Ainsi, l'apprentissage ayant été fait à partir d'images de réalité augmentée comprenant des éléments virtuels représentatifs de l'objet (ou des objets) et/ou de la zone caractéristique (ou des zones caractéristiques), la cohérence des informations de modélisation avec la modélisation de l'objet (ou des objets) et/ou de la zone caractéristique (ou des zones caractéristiques) est garantie. Par ailleurs, dans le cas où à la fois un (ou plusieurs) objet et une (ou plusieurs) zone caractéristique (e.g. les yeux, l'iris, le nez) sont simultanément détectés et modélisés, un effet de synergie est obtenu améliorant les performances obtenues pour l'objet et la zone caractéristique par rapport à une détection et modélisation d'un seul de ces deux éléments.

Dans des modes de réalisation précités, l'apprentissage du système d'apprentissage automatique comprend un apprentissage conjoint à partir, d'une part, du modèle de segmentation de l'élément virtuel donné et, d'autre part, de l'ensemble de points de contour correspondant à une paramétrisation de l'élément virtuel donné. Dans certains de ces modes de réalisation, la détermination mise en œuvre dans le procédé de détection et de modélisation comprend une détermination conjointe :
- du modèle de segmentation dudit au moins un objet et/ou de ladite au moins une zone caractéristique ; et
- de l'ensemble de points de contour correspondant à la paramétrisation dudit au moins un objet et/ou de ladite au moins une zone caractéristique.

Dans des modes de réalisation précités, l'apprentissage conjoint du système d'apprentissage automatique met en œuvre une fonction de coût fonction d'une combinaison linéaire entre, d'une part, une entropie croisée associée au modèle de segmentation de l'élément virtuel donné et, d'autre part, une distance euclidienne associée à l'ensemble de points de contour correspondant à une paramétrisation de l'élément virtuel donné. Dans certains de ces modes de réalisation, la détermination conjointe mise en œuvre dans le procédé de détection et de modélisation met en œuvre une fonction de coût donnée fonction d'une combinaison linéaire entre, d'une part, une entropie croisée associée au modèle de segmentation dudit au moins un objet et/ou de ladite au moins une zone caractéristique et, d'autre part, une distance euclidienne associée à l'ensemble de points de contour correspondant à la paramétrisation dudit au moins un objet et/ou de ladite au moins une zone caractéristique.

Dans des modes de réalisation précités, l'apprentissage du système d'apprentissage automatique met en œuvre des images de réalité augmentée comprenant des images réelles comprenant la représentation d'un visage. Dans certains de ces modes de réalisation, ladite au moins une image comprend la représentation d'un visage donné et le système d'apprentissage automatique détermine en outre, pour au moins un point de contour donné de l'ensemble de points de contour correspondant à la paramétrisation dudit au moins un objet et/ou de ladite au moins une zone caractéristique, une information de visibilité indiquant si le point de contour donné est visible ou s'il est occulté par le visage donné.

Ainsi, le système d'apprentissage automatique détermine en outre la visibilité des points de contour.

Dans des modes de réalisation précités, la fonction de coût mise en œuvre lors de l'apprentissage conjoint du système d'apprentissage automatique est en outre fonction d'une entropie croisée binaire associée à la visibilité du point de contour. Dans certains de ces modes de réalisation, la détermination mise en œuvre dans le procédé de détection et de modélisation met en œuvre la fonction de coût donnée. Une telle fonction de coût donnée est en outre fonction d'une entropie croisée binaire associée à la visibilité dudit point de contour donné.

Dans des modes de réalisation précités, les informations d'apprentissage comprennent la paramétrisation de l'élément virtuel donné. Dans certains de ces modes de réalisation, les informations de modélisation comprennent la paramétrisation dudit au moins un objet et/ou de ladite au moins une zone caractéristique.

Dans des modes de réalisation, ladite au moins une image comprend une pluralité d'images représentant chacune une vue différente dudit au moins un objet et/ou de ladite au moins une zone caractéristique. La détection ainsi que la détermination sont mises en œuvre de manière conjointe pour chacune des images de la pluralité d'images.

Ainsi, les performances de détection et de détermination des informations de modélisation de l'objet (ou des objets) et/ou de la zone caractéristique (ou des zones caractéristiques) sont améliorées.

L'invention concerne également un programme d'ordinateur comprenant des instructions de code de programme pour la mise en œuvre d'un procédé tel que décrit précédemment, selon l'un quelconque de ses différents modes de réalisation, lorsqu'il est exécuté sur un ordinateur.

L'invention concerne également un dispositif pour la détection et la modélisation d'au moins un objet représenté dans au moins une image et/ou d'au moins une zone caractéristique de ladite au moins une image. Un tel dispositif comprend au moins un processeur et/ou au moins une machine de calcul dédiée configuré(e) pour mettre en œuvre les étapes du procédé d'apprentissage selon l'invention (selon l'un quelconque des différents modes de réalisation précités). Ainsi, les caractéristiques et avantages de ce dispositif sont les mêmes que ceux des étapes correspondantes du procédé d'apprentissage décrit précédemment. Par conséquent, ils ne sont pas détaillés plus amplement.

Dans des modes de réalisation, ledit au moins un processeur et/ou ladite au moins une machine de calcul dédiée est en outre configuré(e) pour mettre en œuvre les étapes du procédé de détection et de modélisation selon l'invention (selon l'un quelconque des différents modes de réalisation précités). Ainsi, les caractéristiques et avantages de ce dispositif sont les mêmes que ceux des étapes correspondantes du procédé de détection et de modélisation décrit précédemment. Par conséquent, ils ne sont pas détaillés plus amplement.

Dans des modes de réalisation, le dispositif décrit ci-dessus comprend le système d'apprentissage automatique précité.

Dans des modes de réalisation, le dispositif décrit ci-dessus est le système d'apprentissage automatique précité.

### Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
[Fig.1] représente les étapes d'un procédé d'apprentissage d'un système d'apprentissage automatique pour la détection et la modélisation d'un (ou plusieurs) objet représenté dans au moins une image et/ou d'une (ou plusieurs) zone caractéristique de ladite au moins une image en question selon un mode de réalisation de l'invention ;
[Fig.2a] illustre une image réelle comprenant la représentation d'un visage ;
[Fig.2b] illustre une image de réalité augmentée comprenant l'image réelle de la [Fig.2a] et une paire de lunettes ;
[Fig.2c] illustre un modèle de segmentation de la paire de lunettes de l'image de réalité augmentée de la [Fig.2b] ;
[Fig.2d] illustre ensemble de points de contour correspondant à une paramétrisation de la paire de lunettes de l'image de réalité augmentée de la [Fig.2b] ;
[Fig.3] représente les étapes d'un procédé de détection et de modélisation d'un (ou plusieurs) objet représenté dans au moins une image et/ou d'une (ou plusieurs) zone caractéristique de ladite au moins une image en question selon un mode de réalisation de l'invention ;
[Fig.4a] illustre une image comprenant la représentation d'un visage et d'une paire de lunettes ; [Fig.4b] illustre un modèle de segmentation de la paire de lunettes de l'image de la [Fig.4a] ainsi qu'un ensemble de points de contour correspondant à une paramétrisation de la paire de lunettes de l'image de la [Fig.4a] ;
[Fig.5] illustre un ensemble de points de contour correspondant à une paramétrisation d'un œil dans une image ainsi que de l'iris de l'œil en question ;
[Fig.6] représente un exemple de structure de dispositif permettant la mise en œuvre de certaines étapes du procédé d'apprentissage de la [Fig.1] et/ou du procédé de détection et de modélisation de la [Fig.3] selon un mode de réalisation de l'invention.

### Description détaillée de modes de réalisation de l'invention

Le principe général de l'invention repose sur l'utilisation d'images de réalité augmentée pour effectuer l'apprentissage d'un système d'apprentissage automatique (e.g. un réseau neuronal convolutif) de sorte à le mettre en capacité de détecter un (ou plusieurs) objet (e.g. une paire de lunettes) et/ou une (ou plusieurs) zone caractéristique (e.g. le contour des yeux ou le contour de l'iris des yeux, le nez) dans une image donnée (e.g. une image représentant le visage d'une personne portant des lunettes) et déterminer des informations de modélisation correspondantes.

Plus particulièrement, une telle image de réalité augmentée comprend une image réelle et au moins un élément virtuel représentatif de l'objet (ou des objets) et/ou de la zone caractéristique (ou des zones caractéristiques) en question.

En effet, l'apprentissage d'un réseau de neurones convolutif nécessite de grandes quantités de données annotées. Le coût d'acquisition et d'annotation de ces données est très élevé. Par ailleurs, la précision d'annotation n'est pas garantie, ce qui amène une limite à la robustesse et à la précision des modèles d'inférence ainsi créés. L'utilisation d'images d'objets de synthèse à partir de modèles 2D ou 3D paramétrés permet de disposer de larges volumes de données d'apprentissage ainsi que de garantir le positionnement et la visibilité de points d'annotation 2D ou 3D. Ces objets virtuels sont éclairés par une carte d'environnement réaliste (« environment mapping » en anglais), qui peut être fixe ou bien estimée à partir de l'image réelle. Par ailleurs, l'utilisation de tels éléments virtuels permet de résoudre les problèmes d'occultations, et donc d'éviter d'obtenir une annotation incomplète, ou inconsistante car choisie arbitrairement par l'opérateur d'annotation.

Par ailleurs, il est proposé d'utiliser en complément des images de réalité augmentée, des informations d'apprentissage comprenant un modèle de segmentation associé aux éléments virtuels correspondants ainsi qu'un ensemble de points de contour correspondant à une paramétrisation des éléments virtuels en question.

Ainsi, la segmentation (e.g. un masque binaire de l'objet et/ou de la zone caractéristique simulé(s) par le (ou les) éléments virtuels) et la distribution des points sur le contour sont réalisées avec précision, sans besoin d'annotation de l'image réelle.

Dans la suite de la présente demande, par « système d'apprentissage automatique » on entend un système configuré aussi bien pour effectuer l'apprentissage d'un modèle d'apprentissage que pour utiliser le modèle en question.

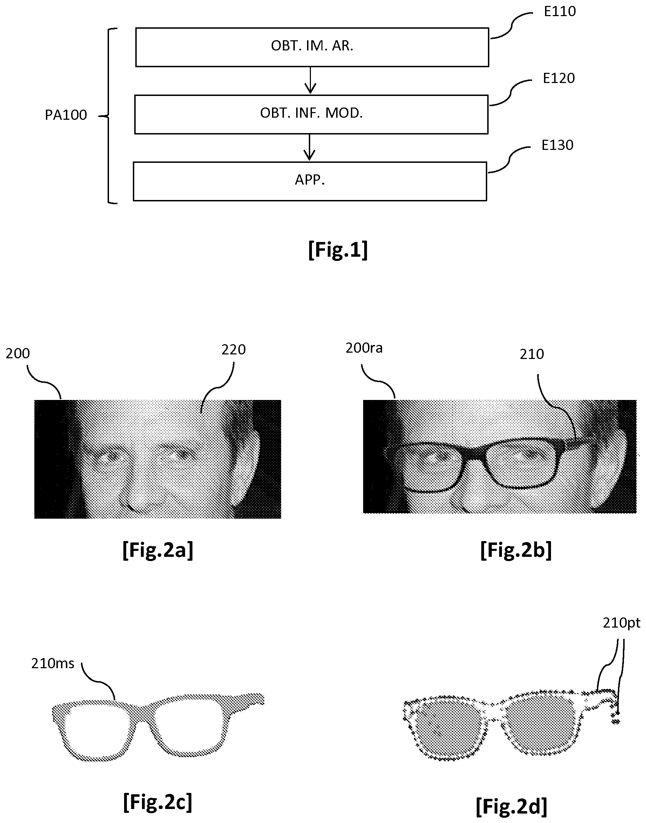

On présente désormais, en relation avec la **[****Fig.1****]** les étapes d'un procédé PA100 d'apprentissage d'un système d'apprentissage automatique (e.g. un réseau neuronal convolutif) pour la détection et la modélisation d'un (ou plusieurs) objet représenté dans au moins une image et/ou d'une (ou plusieurs) zone caractéristique de ladite au moins une image en question selon un mode de réalisation de l'invention. Un exemple d'implémentation des étapes du procédé PA100 en question est par ailleurs discuté en relation avec la **[****Fig.2a****],** la **[****Fig.2b****],** la **[****Fig.2c****]** et la **[****Fig.2d****].** Plus particulièrement, selon l'exemple de la [Fig.2a], la [Fig.2b], la [Fig.2c] et la [Fig.2d], l'image réelle 200 comprend la représentation d'un visage 220 et l'élément virtuel 210 est une paire de lunettes. De manière correspondante, la [Fig.2c] illustre un modèle de segmentation 210ms de la paire de lunettes virtuelle de la [Fig.2b] et la [Fig.2d] illustre un ensemble de points de contour 210pt correspondant à une paramétrisation de la paire de lunettes virtuelle de la [Fig.2b]. Pour plus de clarté, les références aux éléments de la [Fig.2a], la [Fig.2b], la [Fig.2c] et la [Fig.2d], seront utilisées dans la suite pour illustrer de manière non limitative les caractéristiques du procédé PA100.

De retour à la [Fig.1], lors d'une **étape E110,** le système d'apprentissage automatique obtient une pluralité d'images de réalité augmentée 200ra comprenant une image réelle 200 et au moins un élément virtuel 210 représentatif de l'objet (ou des objets) et/ou de la zone caractéristique (ou des zones caractéristiques).

Par exemple, chaque image de réalité augmentée 200ra est générée grâce à un outil dédiée à l'insertion d'éléments virtuels 210 dans une image réelle 200. Dans des variantes, la génération des images de réalité augmentée 200ra comprend une augmentation (via l'ajout e.g. d'un bruit gaussien, d'un flou) d'au moins un élément virtuel 210 avant insertion dans l'image réelle 200. Une telle augmentation comprend par exemple un éclairage de l'objet virtuel à l'aide d'une carte d'environnement réaliste qui peut être fixe ou bien estimée à partir de l'image réelle. Ainsi, le réalisme de l'élément virtuel 210 et/ou son intégration dans l'image réelle 200 est amélioré. Un tel réalisme amélioré permet par exemple de faciliter l'apprentissage ainsi que d'améliorer les performances de détection sur images réelles.

Les images de réalité augmentée 200ra ainsi générées sont par exemple stockées dans une base de données à laquelle le système d'apprentissage automatique accède afin d'obtenir les images de réalité augmentée 200ra en question.

De retour à la [Fig.1], lors d'une **étape E120,** le système d'apprentissage automatique obtient, pour chaque image de réalité augmentée, des informations d'apprentissage comprenant, pour au moins un élément virtuel 210 donné de l'image de réalité augmentée 200ra considérée :
- un modèle de segmentation 210ms de l'élément virtuel 210 donné. Un tel modèle de segmentation est par exemple un masque binaire de l'objet (ou des objets) et/ou de la zone caractéristique (ou des zones caractéristiques) simulé(s) par l'élément virtuel 210 donné ; et
- un ensemble de points de contour 210pt correspondant à une paramétrisation de l'élément virtuel 210 donné. Par exemple, la distribution des points correspond à une paramétrisation 2D ou 3D de l'objet (ou des objets) et/ou de la zone caractéristique (ou des zones caractéristiques) simulé(s) par l'élément virtuel 210 donné. Une telle paramétrisation (également dénommée modèle paramétrique) est par exemple un modèle 3DMM (pour « 3D Morphable Model » en anglais). Par exemple, dans le cadre d'une paramétrisation 3D, les points de contours d'un objet 3D peuvent être référencés en 2D par la projection et la paramétrisation de la courbe géodésique sur la surface de l'objet 3D qui représente le contour depuis le point de vue de la caméra ayant pris l'image réelle.

Ainsi, la segmentation et la distribution des points sur le contour 210pt sont réalisées avec précision, le modèle de segmentation 210ms et l'ensemble de points de contour 210pt étant obtenus directement à partir de l'élément virtuel 210 correspondant, et non pas par post-traitement de l'image de réalité augmentée comprenant l'élément virtuel 210 en question. Ceci permet de résoudre, par exemple, l'ambigüité inhérente à l'annotation manuelle de tels points ainsi que de remonter aisément à la paramétrisation à partir des points de contour 210pt.

Dans des modes de réalisations, les informations d'apprentissage comprennent modèle de segmentation 210ms et une paramétrisation des points de contours 210pt (au lieu des coordonnées de ces points de contours 210pt). Cette paramétrisation peut être issue de la modélisation de l'élément virtuel 210, ou bien être une modélisation spécifique a posteriori de l'élément virtuel 210. Par exemple, le système d'apprentissage automatique apprend les points de contrôle d'une ou plusieurs splines, à partir desquelles on retrouve ensuite les points de contours 210. Dans ce cas, la sortie du système d'apprentissage automatique est constituée de ces paramètres de modélisation (par exemple, des points de contrôles), avec une fonction de coût inchangée (par exemple une distance euclidienne entre les points de contours et la vérité terrain). Pour que cela soit possible, il faut que la transformation permettant de passer des paramètres de modélisation aux points de contours 210pt soit différentiable, afin que les gradients puissent être rétro-propagés par l'algorithme d'apprentissage du système d'apprentissage automatique.

Dans des modes de réalisations, les informations d'apprentissage comprennent en outre un terme supplémentaire de cohérence entre le modèle de segmentation 210ms et les points de contour 210pt. Cette cohérence est mesurée par l'intersection entre le modèle de segmentation 210ms et la surface délimitée par les points de contour 210pt. Pour cela, on définit un maillage sur cette surface (par exemple par l'algorithme de Delaunay bien connu de l'état de l'art), qui est ensuite utilisé par un moteur de rendu différentiel qui colorie ("remplit") cette surface d'une valeur uniforme. On peut ensuite définir un terme de cohérence (par exemple une entropie croisée), qui mesure la proximité de la segmentation et des pixels de la surface rendue.

Par exemple, les informations d'apprentissage sont stockées dans la base de données précitée en relation avec l'image de réalité augmentée 200ra correspondante.

De retour à la [Fig.1], lors d'une **étape E130,** le système d'apprentissage automatique met en œuvre une phase d'apprentissage à partir de la pluralité d'images de réalité augmentée 200ra et des informations d'apprentissage. Un tel apprentissage permet de générer un jeu de paramètres (ou modèle d'apprentissage) mettant le système d'apprentissage automatique en capacité de détecter l'objet (ou les objets) et/ou la zone caractéristique (ou les zones caractéristiques) en question dans au moins une image donnée et à déterminer des informations de modélisation correspondantes.

Par exemple, lors d'une itération donnée d'un tel apprentissage, l'entrée du système d'apprentissage est l'image de réalité augmentée 200ra comprenant l'élément virtuel 210. L'apprentissage met également en œuvre les informations d'apprentissage associée à l'image de réalité augmentée 200ra. Les informations d'apprentissage sont par exemple un modèle de segmentation 210ms de l'objet virtuel 210 et ses points de contour 210pt. La connaissance de l'élément virtuel 210 via e.g. son modèle 3D paramétrique permet de générer ces informations d'apprentissage de manière parfaite, via la projection du modèle 3D dans l'image pour le modèle de segmentation 210ms et par un échantillonnage des points du modèle pour les points de contour 210pt. La sortie du système d'apprentissage est un modèle de segmentation de l'élément virtuel et ses points de contour, ou une paramétrisation de ceux-ci. L'apprentissage est réalisé par comparaison des sorties du système d'apprentissage avec les informations d'apprentissage, jusqu'à convergence. Dans le cas où la sortie du système d'apprentissage est une paramétrisation (par exemple 3DMM, une spline, courbe de Bézier, etc...), les points de contours sont déterminés à partir de ces paramètres, et comparés aux points de contour vérité.

Dans des modes de réalisation, pour chaque image de réalité augmentée 200ra, l'apprentissage du système d'apprentissage automatique comprend un apprentissage conjoint à partir du modèle de segmentation 210ms et de l'ensemble de points de contour 210pt. Ainsi, un effet de synergie est obtenu pour l'apprentissage du système d'apprentissage automatique, l'apprentissage du modèle de segmentation 210ms et l'apprentissage de l'ensemble de points de contour 210pt se renforçant mutuellement.

Par exemple, le système d'apprentissage automatique comprend une branche pour l'apprentissage du modèle de segmentation 210ms et une branche pour l'apprentissage de l'ensemble de points de contour 210pt. Une entropie croisée est associée à la branche pour l'apprentissage du modèle de segmentation et une distance euclidienne est associée à la branche pour l'apprentissage de l'ensemble de points de contour. L'apprentissage conjoint met en œuvre une fonction de coût fonction d'une combinaison linéaire entre l'entropie croisée associée au modèle de segmentation 210ms et une distance euclidienne associée à l'ensemble de points de contour 210pt.

Dans certains modes de réalisation, le système d'apprentissage automatique est un réseau de segmentation sémantique de type convolutif. Par exemple le système d'apprentissage automatique est un réseau de type « Unet » comme décrit dans l'article de Ronneberger, Fischer, & Brox : « U-Net: Convolutional Networks for Biomedical Image Segmentation », 2015, ou bien de type « Deeplabv3+ » comme décrit dans l'article de Chen, Zhu, Papandreou, Schroff, & Adam : « Encoder-Decoder with Atrous Separable Convolution for Semantic Image Segmentation », 2018.

Dans le cas « U-Net », la structure du réseau peut être modifiée pour apprendre conjointement le modèle de segmentation et l'ensemble de points de contour. Par exemple, la division en deux branches (branche pour l'apprentissage du modèle de segmentation et branche pour l'apprentissage de l'ensemble de points de contour) intervient à la dernière couche de convolution de la partie décodeur. Ainsi la cohérence entre apprentissage du modèle de segmentation et apprentissage de l'ensemble de points de contour est assurée. Par ailleurs, des couches de mise en commun (ou « pooling » en anglais) suivies d'une couche entièrement connectée (ou « fully connected » en anglais) permet de réduire la dimensionnalité de la branche dédiée à l'apprentissage de l'ensemble de points de contour.

Dans le cas « Deeplabv3+ », une étape de concaténation des caractéristiques bas-niveau et des caractéristiques de l'encodeur est effectuée à une résolution x4. C'est par exemple à ce niveau que l'on scinde en deux branches (branche pour l'apprentissage du modèle de segmentation et branche pour l'apprentissage de l'ensemble de points de contour). Dans certaines implémentations on peut ajouter des couches de convolution, une couche de mise en commun avec prise de valeur maximale (ou « max pooling » en anglais) et enfin une couche entièrement connectée pour l'apprentissage de l'ensemble de points de contour.

Selon l'exemple illustré sur la [Fig.2a], la [Fig.2b], la [Fig.2c] et la [Fig.2d], l'ensemble des points de contour 210pt de la [Fig.2d] comprend notamment les points de contour 210pt qui sont occultés par le visage 220 une fois la paire de lunettes virtuelle insérée dans l'image réelle 200 afin de générer l'image de réalité augmentée 200ra. Ainsi, l'utilisation de tels éléments virtuels permet de résoudre les problèmes d'occultations, et donc d'éviter d'obtenir une annotation incomplète, comme ce pourrait être le cas dans le présent exemple avec la fin des branches de lunettes occultées par les oreilles.

Ainsi, dans des modes de réalisation du procédé PA100 dans lesquelles l'image réelle 200 comprend la représentation d'un visage, les informations d'apprentissage comprennent, pour au moins un point de contour 210pt de l'ensemble de points, une information de visibilité indiquant si le point de contour 210pt est visible ou s'il est occulté par le visage 220. Ainsi, la visibilité des points de contour est prise en compte.

Par exemple, dans les modes de réalisation précités dans lesquels le système d'apprentissage automatique est un réseau de segmentation sémantique de type convolutif, e.g. de type « Unet » ou de type « Deeplabv3+ », la fonction de coût est en outre fonction d'une entropie croisée binaire associée à la visibilité du point de contour 210pt.

Dans des modes de réalisation, les informations d'apprentissage comprennent la paramétrisation de l'élément virtuel 210 donné, et donc indirectement de l'objet (ou des objets) et/ou de la zone caractéristique (ou des zones caractéristiques) simulé(s) par l'élément virtuel 210 donné. Ainsi, le système d'apprentissage automatique est mis en capacité de délivrer directement la paramétrisation en question.

Dans des modes de réalisation, le procédé PA100 comprend une étape d'affinement de l'apprentissage dans laquelle le système d'apprentissage automatique affine le jeu de paramètres délivré lors de la mise en œuvre de l'étape E310 à partir de données réelles comprenant des images réelles annotées. Une telle annotation est faite soit manuellement, soit automatiquement (e.g. par mise en œuvre d'un algorithme d'analyse de visage (ou « face parsing » en anglais).

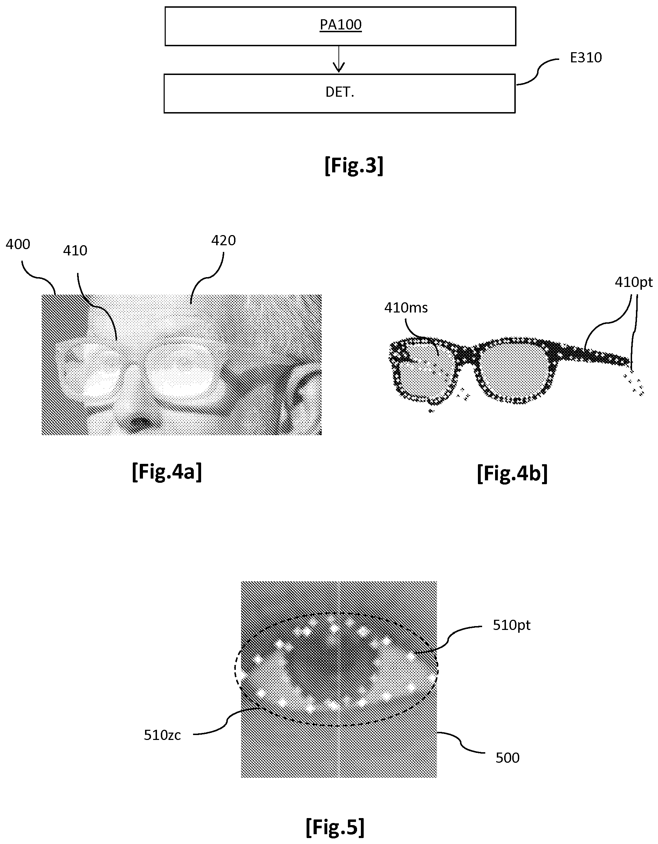

On présente désormais, en relation avec la **[****Fig.3****]** les étapes d'un procédé de détection et de modélisation d'un (ou plusieurs) objet représenté dans au moins une image et/ou d'une (ou plusieurs) zone caractéristique de ladite au moins une image selon un mode de réalisation de l'invention.

Plus particulièrement, le procédé de détection et de modélisation selon la présente technique est mis en œuvre par le système d'apprentissage automatique précité entrainé par mise en œuvre du procédé PA100 d'apprentissage décrit ci-dessus (selon l'un quelconque des modes de réalisation précité).

Ainsi, lors d'une **étape E310,** le système d'apprentissage automatique effectue une détection d'un (ou plusieurs) objet et/ou d'une (ou plusieurs) zone caractéristique dans au moins une image (image réelle ou augmentée) et une détermination d'informations de modélisation de l'objet (ou des objets) et/ou de la zone caractéristique (ou des zones caractéristiques).

Ainsi, l'apprentissage ayant été fait à partir d'images de réalité augmentée 200ra comprenant des éléments virtuels 210 représentatifs de l'objet (ou des objets) et/ou de la zone caractéristique (ou des zones caractéristiques) en question, la cohérence des informations de modélisation avec la modélisation de l'objet (ou des objets) et/ou de la zone caractéristique (ou des zones caractéristiques) est garantie.

Par ailleurs, dans des modes de réalisation où à la fois au moins un objet (e.g. une paire de lunettes) et au moins une zone caractéristique de ladite au moins une image (e.g. les yeux, l'iris, le nez) sont simultanément détectés et modélisés, un effet de synergie est obtenu améliorant les performances obtenues pour la détection et la modélisation dudit au moins un objet et de ladite au moins une zone caractéristique par rapport à une détection et modélisation d'un seul de ces deux éléments.

Dans des modes de réalisation, les informations de modélisation comprennent :
- un modèle de segmentation de l'objet (ou des objets) et/ou de la zone caractéristique (ou des zones caractéristiques) ; et
- un ensemble de points de contour correspondant à une paramétrisation de l'objet (ou des objets) et/ou de la zone caractéristique (ou des zones caractéristiques).

Ainsi, il est aisé de remonter à la paramétrisation du modèle à partir des points de contour.

Dans certains modes de réalisation décrits ci-dessus en relation avec la [Fig.1], l'apprentissage du système d'apprentissage automatique comprend un apprentissage conjoint à partir du modèle de segmentation 210ms et de l'ensemble de points de contour 210pt. Dans certains de ces modes de réalisation, l'étape E310 comprend une détermination conjointe du modèle de segmentation de l'objet (ou des objets) et/ou de la zone caractéristique (ou des zones caractéristiques) et de l'ensemble de points de contour correspondant à une paramétrisation de l'objet (ou des objets) et/ou de la zone caractéristique (ou des zones caractéristiques).

Dans certains modes de réalisation décrits ci-dessus en relation avec la [Fig.1], l'apprentissage conjoint met en œuvre une fonction de coût fonction d'une combinaison linéaire entre une entropie croisée associée au modèle de segmentation 210ms et une distance euclidienne associée à l'ensemble de points de contour 210pt. Dans certains de ces modes de réalisation, la détection et la modélisation de l'étape E310 mettent en œuvre la fonction de coût précitée fonction d'une combinaison linéaire entre une entropie croisée associée au modèle de segmentation et d'une distance euclidienne associée à l'ensemble de points.

Dans certains modes de réalisation décrits ci-dessus en relation avec la [Fig.1], les informations d'apprentissage comprennent une information de visibilité indiquant si un point de contour 210pt est visible ou s'il est occulté par le visage 220. Dans certains de ces modes de réalisation, la détection et la modélisation de l'étape E310 déterminent en outre pour au moins un point de contour, une information de visibilité indiquant si le point de contour est visible ou s'il est occulté par un visage de l'image analysée lors de l'étape E310. Ainsi, le système d'apprentissage automatique détermine en outre la visibilité des points de contour. Certains de ces modes de réalisation mettent en œuvre la fonction de coût fonction d'une perte d'entropie croisée binaire associée à la visibilité des points de contour telle que mise en œuvre dans les modes de réalisation correspondants décrit ci-dessus en relation avec la [Fig.1] pour l'apprentissage.

Dans certains modes de réalisation décrits ci-dessus en relation avec la [Fig.1], les informations d'apprentissage comprennent la paramétrisation des éléments virtuels utilisés dans les images de réalité augmentée, et donc indirectement de l'objet (ou des objets) et/ou de la zone caractéristique (ou des zones caractéristiques) simulé(s) par les éléments virtuels en question. Dans certains de ces modes de réalisation, la détection et la modélisation de l'étape E310 déterminent ainsi la paramétrisation de l'objet (ou des objets) et/ou de la zone caractéristique (ou des zones caractéristiques) détecté(s) dans l'image analysée lors de l'étape E310.

Dans certains modes de réalisation, l'objet (ou des objets) et/ou la zone caractéristique (ou des zones caractéristiques) sont représentées dans une pluralité d'images représentant chacune une vue différente de l'objet (ou des objets) et/ou de la zone caractéristique (ou des zones caractéristiques) en question. De la sorte, lors de l'étape E310, la mise en œuvre conjointe de la détection et de la modélisation dans les différentes images de la pluralité d'images permet de déterminer de manière améliorée les informations de modélisation de l'objet (ou des objets) et/ou de la zone caractéristique (ou des zones caractéristiques) en question.

Dans des modes de réalisation, l'image devant être analysée par le système d'apprentissage automatique lors de l'étape E310 est normalisée en position. Lorsque l'image représente par exemple un visage, pour des sous-parties prédéterminées du visage (e.g. l'œil), on redimensionne par exemple une zone autour de la sous-partie en question grâce à des marqueurs (« landmarks » en anglais) faciaux. Ces marqueurs peuvent être obtenus par n'importe quelle méthode connue de détection de marqueurs ou de reconnaissance de visage. L'étape E310 de détection et de détermination d'informations de modélisation est ainsi implémentée pour chaque zone redimensionnée. De la sorte, la détection de l'objet (ou des objets) et/ou de la zone caractéristique (ou des zones caractéristiques) ainsi que la détermination des informations de modélisation correspondantes sont facilitées.

Dans des modes de réalisation, des marqueurs (e.g. des marqueurs faciaux) sont ajoutés sur l'image devant être analysée par le système d'apprentissage automatique lors de l'étape E310 afin d'indiquer des point caractéristiques (e.g. position du nez, position du point tempe). Ces marqueurs peuvent être obtenus par exemple par un algorithme d'analyse de visage. De la sorte, la détection de l'objet (ou des objets) et/ou de la zone caractéristique (ou des zones caractéristiques) ainsi que la détermination d'informations de modélisation correspondantes sont facilitées.

Un exemple d'implémentation des étapes du procédé de détection et de modélisation est maintenant discuté tout d'abord en relation avec la **[****Fig.4a****]** et la **[****Fig.4b****].** Selon cet exemple, l'image 400 comprend la représentation d'un visage 420. Par ailleurs, il est supposé que le système d'apprentissage automatique a été entrainé à détecter et modéliser des paires de lunettes, par exemple à partir d'images de réalité augmentée telles que décrites ci-dessus en relation avec la [Fig.2a], la [Fig.2b], la [Fig.2c] et la [Fig.2d]. Ainsi, l'objet 410 à détecter et modéliser dans l'image 400 est une paire de lunettes. Par mise en œuvre de l'étape E310, le système d'apprentissage automatique détermine des informations de modélisation comprenant le modèle de segmentation 410ms et l'ensemble de point de contour 410pt de la paire de lunettes en question. L'ensemble des points de contour 410pt de la [Fig.4b] comprend notamment les points de contour 410pt qui sont occultés par le visage 420 dans l'image 400. Ainsi, la méthode ici décrite permet de résoudre les problèmes d'occultations, et donc d'éviter d'obtenir une annotation incomplète, comme ce pourrait être le cas dans le présent exemple avec la fin des branches de lunettes occultées par les oreilles.

Un autre exemple d'implémentation des étapes du procédé de détection et de modélisation est maintenant discuté en relation avec la **[****Fig.5****].** Plus particulièrement, selon cet exemple, l'image 500 comprend la représentation partielle d'un visage. La zone caractéristique 510zc à détecter et modéliser est l'œil représenté dans l'image 500. Par ailleurs, il est supposé que le système d'apprentissage automatique a été entrainé à détecter et modéliser des yeux à partir d'images de réalité augmentée comprenant un ou plusieurs éléments virtuels placés au niveau des yeux afin de les modéliser. De la sorte, par mise en œuvre de l'étape E310, le système d'apprentissage automatique détermine des informations de modélisation de la zone caractéristique 510zc comprenant notamment l'ensemble de point de contour 510pt de l'œil en question ainsi que de l'iris dans le cas présent.

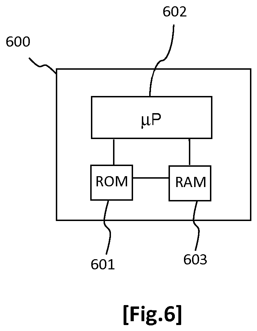

On présente désormais, en relation avec la **[****Fig.6****]** un exemple de structure de dispositif 600 permettant de mettre en œuvre certaines étapes du procédé PA100 d'apprentissage de la [Fig.1] et/ou du procédé de détection et de modélisation de la [Fig.3] selon un mode de réalisation de l'invention.

Le dispositif 600 comprend une mémoire vive 603 (par exemple une mémoire RAM), une unité de traitement 602 équipée par exemple d'un (ou plusieurs) processeur(s), et pilotée par un programme d'ordinateur stocké dans une mémoire morte 601 (par exemple une mémoire ROM ou un disque dur). A l'initialisation, les instructions de code du programme d'ordinateur sont par exemple chargées dans la mémoire vive 603 avant d'être exécutées par le processeur de l'unité de traitement 602.

Cette [Fig.6] illustre seulement une manière particulière, parmi plusieurs possibles, de réaliser le dispositif 600 afin qu'il effectue certaines étapes du procédé PA100 d'apprentissage de la [Fig.1] et/ou du procédé de détection et de modélisation de la [Fig.3] (selon l'un quelconque des modes de réalisation et/ou variantes décrit(e)s ci-dessus en relation avec les [Fig.1] et [Fig.3]). En effet, ces étapes peuvent être réalisées indifféremment sur une machine de calcul reprogrammable (un ordinateur PC, un (ou plusieurs) processeur(s) DSP ou un (ou plusieurs) microcontrôleur(s)) exécutant un programme comprenant une séquence d'instructions, ou sur une machine de calcul dédiée (par exemple un ensemble de portes logiques comme un (ou plusieurs) FPGA ou un (ou plusieurs) ASIC, ou tout autre module matériel).

Dans le cas où le dispositif 600 est réalisé au moins en partie avec une machine de calcul reprogrammable, le programme correspondant (c'est-à-dire la séquence d'instructions) pourra être stocké dans un médium de stockage amovible (tel que par exemple un CD-ROM, un DVD-ROM, une clé USB) ou non, ce médium de stockage étant lisible partiellement ou totalement par un ordinateur ou un processeur.

Dans certains modes de réalisation, le dispositif 600 comprend le système d'apprentissage automatique.

Dans certains modes de réalisation, le dispositif 600 est le système d'apprentissage automatique.

## Revendications

1. Procédé d'apprentissage d'un système d'apprentissage automatique pour la détection et la modélisation d'au moins un objet représenté dans au moins une image donnée et/ou d'au moins une zone caractéristique de ladite au moins une image donnée,
**caractérisé en ce que** ledit système d'apprentissage automatique effectue :
- une génération d'une pluralité d'images de réalité augmentée comprenant une image réelle et au moins un élément virtuel représentatif dudit au moins un objet et/ou de ladite au moins une zone caractéristique ;
- une obtention, pour chaque image de réalité augmentée, d'informations d'apprentissage comprenant, pour au moins un élément virtuel donné de ladite image de réalité augmentée :
- un modèle de segmentation de l'élément virtuel donné obtenu à partir dudit élément virtuel donné, et
- soit un ensemble de points de contour correspondant à une paramétrisation de l'élément virtuel donné, soit ladite paramétrisation, obtenu(e) à partir dudit élément virtuel donné ; et
- un apprentissage à partir de la pluralité d'images de réalité augmentée et desdites informations d'apprentissage, délivrant un jeu de paramètres mettant ledit système d'apprentissage automatique en capacité de détecter ledit au moins un objet et/ou ladite au moins une zone caractéristique dans ladite au moins une image donnée et à déterminer des informations de modélisation correspondantes comprenant :
- un modèle de segmentation dudit au moins un objet et/ou de ladite au moins une zone caractéristique, et
- soit un ensemble de points de contour correspondant à une paramétrisation dudit au moins un objet et/ou de ladite au moins une zone caractéristique, soit ladite paramétrisation.

2. Procédé d'apprentissage selon la revendication 1 dans lequel, pour chaque image de réalité augmentée, ledit apprentissage dudit système d'apprentissage automatique comprend un apprentissage conjoint à partir, d'une part, dudit modèle de segmentation de l'élément virtuel donné et, d'autre part, dudit ensemble de points de contour correspondant à une paramétrisation de l'élément virtuel donné.

3. Procédé d'apprentissage selon la revendication 2 dans lequel ledit apprentissage conjoint met en œuvre une fonction de coût fonction d'une combinaison linéaire entre, d'une part, une entropie croisée associée audit modèle de segmentation de l'élément virtuel donné et, d'autre part, une distance euclidienne associée audit ensemble de points de contour correspondant à une paramétrisation de l'élément virtuel donné.

4. Procédé d'apprentissage selon l'une quelconque des revendications 1 à 3 dans lequel ladite image réelle comprend la représentation d'un visage,
et dans lequel lesdites informations d'apprentissage comprennent, pour au moins un point de contour dudit ensemble de points de contour correspondant à une paramétrisation de l'élément virtuel donné, une information de visibilité indiquant si le point de contour est visible ou s'il est occulté par ledit visage.

5. Procédé d'apprentissage selon la revendication 4 en ce qu'elle dépend de la revendication 2, dans lequel ladite fonction de coût est en outre fonction d'une entropie croisée binaire associée à la visibilité dudit point de contour.

6. Procédé de détection et de modélisation d'au moins un objet représenté dans au moins une image et/ou d'au moins une zone caractéristique de ladite au moins une image,
**caractérisé en ce qu'**un système d'apprentissage automatique, entrainé par mise en œuvre du procédé d'apprentissage selon l'une quelconque des revendications 1 à 5, effectue une détection dudit au moins un objet et/ou de ladite au moins une zone caractéristique dans ladite au moins une image et effectue une détermination des informations de modélisation dudit au moins un objet et/ou de ladite au moins une zone caractéristique.

7. Procédé de détection et de modélisation selon la revendication 6 dans lequel ledit système d'apprentissage automatique est entrainé par mise en œuvre du procédé d'apprentissage selon la revendication 2 ou selon l'une quelconque des revendications 3 à 5 en ce qu'elle dépend de la revendication 2,
et dans lequel ladite détermination comprend une détermination conjointe :
- dudit modèle de segmentation dudit au moins un objet et/ou de ladite au moins une zone caractéristique ; et
- dudit ensemble de points de contour correspondant à ladite paramétrisation dudit au moins un objet et/ou de ladite au moins une zone caractéristique.

8. Procédé de détection et de modélisation selon l'une quelconque des revendications 6 à 7 dans lequel ledit système d'apprentissage automatique est entrainé par mise en œuvre du procédé d'apprentissage selon la revendication 4 ou 5 en ce qu'elle dépend de la revendication 4,
dans lequel ladite au moins une image comprend la représentation d'un visage donné,
et dans lequel ledit système d'apprentissage automatique détermine en outre, pour au moins un point de contour donné dudit ensemble de points de contour correspondant à ladite paramétrisation dudit au moins un objet et/ou de ladite au moins une zone caractéristique, une information de visibilité indiquant si le point de contour donné est visible ou s'il est occulté par ledit visage donné.

9. Procédé de détection et de modélisation selon l'une quelconque des revendications 6 à 8 dans lequel ladite au moins une image comprend une pluralité d'images représentant chacune une vue différente dudit au moins un objet et/ou de ladite au moins une zone caractéristique,
et dans lequel ladite détection et ladite détermination sont mises en œuvre de manière conjointe pour chacune des images de ladite pluralité d'images.

10. Produit programme d'ordinateur comprenant des instructions de code de programme pour la mise en œuvre du procédé selon l'une quelconque des revendications 1 à 9, lorsque ledit programme est exécuté sur un ordinateur.

11. Dispositif pour la détection et la modélisation d'au moins un objet représenté dans au moins une image et/ou d'au moins une zone caractéristique de ladite au moins une image, **caractérisé en ce qu'**il comprend au moins un processeur et/ou au moins une machine de calcul dédiée configurée pour implémenter :
- une génération d'une pluralité d'images de réalité augmentée comprenant une image réelle et au moins un élément virtuel représentatif dudit au moins un objet et/ou de ladite au moins une zone caractéristique ;
- une obtention, pour chaque image de réalité augmentée, d'informations d'apprentissage comprenant, pour au moins un élément virtuel donné de ladite image de réalité augmentée :
- un modèle de segmentation de l'élément virtuel donné obtenu à partir dudit élément virtuel donné, et
- soit un ensemble de points de contour correspondant à une paramétrisation de l'élément virtuel donné, soit ladite paramétrisation, obtenu(e) à partir dudit élément virtuel donné ; et
- un apprentissage à partir de la pluralité d'images de réalité augmentée et desdites informations d'apprentissage, délivrant un jeu de paramètres mettant ledit système d'apprentissage automatique en capacité de détecter ledit au moins un objet et/ou ladite au moins une zone caractéristique dans au moins une image donnée et à déterminer des informations de modélisation correspondantes comprenant :
- un modèle de segmentation dudit au moins un objet et/ou de ladite au moins une zone caractéristique, et
- soit un ensemble de points de contour correspondant à une paramétrisation dudit au moins un objet et/ou de ladite au moins une zone caractéristique, soit ladite paramétrisation.

## Patentansprüche

1. Verfahren zum Lernen eines Systems des maschinellen Lernens zur Detektion und Modellierung mindestens eines in mindestens einem gegebenen Bild dargestellten Objekts und/oder mindestens eines charakteristischen Bereichs des genannten mindestens einen gegebenen Bildes,
**dadurch gekennzeichnet, dass** das genannte System des maschinellen Lernens Folgendes durchführt:
- ein Erzeugen einer Vielzahl von Augmented-Reality-Bildern, die ein reales Bild und mindestens ein virtuelles Element umfassen, das für das genannte mindestens eine Objekt und/oder den genannten mindestens einen charakteristischen Bereich repräsentativ ist;
- ein Erhalten von Lerninformationen für jedes Augmented-Reality-Bild, wobei die Lerninformationen für mindestens ein gegebenes virtuelles Element des genannten Augmented-Reality-Bildes Folgendes umfassen:
- ein Segmentierungsmodell des gegebenen virtuellen Elements, das aus dem genannten gegebenen virtuellen Element erhalten wird, und
- entweder eine Menge von Konturpunkten, die einer Parametrisierung des gegebenen virtuellen Elements entspricht, oder die genannte Parametrisierung, erhalten aus dem genannten gegebenen virtuellen Element; und
- ein Lernen auf der Grundlage der Vielzahl von Augmented-Reality-Bildern und der genannten Lerninformationen, wodurch ein Parametersatz bereitgestellt wird, der das genannte System des maschinellen Lernens in die Lage versetzt, das genannte mindestens eine Objekt und/oder den genannten mindestens einen charakteristischen Bereich in dem genannten mindestens einen gegebenen Bild zu detektieren und entsprechende Modellierungsinformationen zu bestimmen, die Folgendes umfassen:
- ein Segmentierungsmodell des genannten mindestens einen Objekts und/oder des genannten mindestens einen charakteristischen Bereichs, und
- entweder eine Menge von Konturpunkten, die einer Parametrisierung des genannten mindestens einen Objekts und/oder des genannten mindestens einen charakteristischen Bereichs entspricht, oder die genannte Parametrisierung.

2. Verfahren zum Lernen nach Anspruch 1, wobei für jedes Augmented-Reality-Bild das genannte Lernen des genannten Systems des maschinellen Lernens ein gemeinsames Lernen auf der Grundlage einerseits des genannten Segmentierungsmodells des gegebenen virtuellen Elements und andererseits der genannten Menge von Konturpunkten, die einer Parametrisierung des gegebenen virtuellen Elements entspricht, umfasst.

3. Verfahren zum Lernen nach Anspruch 2, wobei das genannte gemeinsame Lernen eine Kostenfunktion als Funktion einer linearen Kombination zwischen einerseits einer Kreuzentropie, die dem genannten Segmentierungsmodell des gegebenen virtuellen Elements zugeordnet ist, und andererseits einer euklidischen Distanz, die der genannten Menge von Konturpunkten, die einer Parametrisierung des gegebenen virtuellen Elements entspricht, zugeordnet ist, umsetzt.

4. Verfahren zum Lernen nach einem der Ansprüche 1 bis 3, wobei das genannte reale Bild die Darstellung eines Gesichts umfasst,
und wobei die genannten Lerninformationen für mindestens einen Konturpunkt der genannten Menge von Konturpunkten, die einer Parametrisierung des gegebenen virtuellen Elements entspricht, eine Sichtbarkeitsinformation umfassen, die angibt, ob der Konturpunkt sichtbar ist oder ob er durch das genannte Gesicht verdeckt ist.

5. Verfahren zum Lernen nach Anspruch 4 in seiner Rückbeziehung auf Anspruch 2, wobei die genannte Kostenfunktion ferner eine Funktion einer binären Kreuzentropie ist, die der Sichtbarkeit des genannten Konturpunkts zugeordnet ist.

6. Verfahren zur Detektion und Modellierung mindestens eines in mindestens einem Bild dargestellten Objekts und/oder mindestens eines charakteristischen Bereichs des genannten mindestens einen Bildes,
**dadurch gekennzeichnet, dass** ein System des maschinellen Lernens, das durch Umsetzung des Lernverfahrens nach einem der Ansprüche 1 bis 5 gelernt ist, eine Detektion des genannten mindestens einen Objekts und/oder des genannten mindestens einen charakteristischen Bereichs in dem genannten mindestens einen Bild durchführt und eine Bestimmung der Modellierungsinformationen des genannten mindestens einen Objekts und/oder des genannten mindestens einen charakteristischen Bereichs durchführt.

7. Verfahren zur Detektion und Modellierung nach Anspruch 6, wobei das genannte System des maschinellen Lernens durch Umsetzung des Lernverfahrens nach Anspruch 2 oder nach einem der Ansprüche 3 bis 5 in seiner Rückbeziehung auf Anspruch 2 gelernt ist,
und wobei die genannte Bestimmung eine gemeinsame Bestimmung umfasst:
- des genannten Segmentierungsmodells des genannten mindestens einen Objekts und/oder des genannten mindestens einen charakteristischen Bereichs; und
- der genannten Menge von Konturpunkten, die der genannten Parametrisierung des genannten mindestens einen Objekts und/oder des genannten mindestens einen charakteristischen Bereichs entspricht.

8. Verfahren zur Detektion und Modellierung nach einem der Ansprüche 6 bis 7, wobei das genannte System des maschinellen Lernens durch Umsetzung des Lernverfahrens nach Anspruch 4 oder 5 in seiner Rückbeziehung auf Anspruch 4 gelernt ist,
wobei das genannte mindestens eine Bild die Darstellung eines gegebenen Gesichts umfasst, und wobei das genannte System des maschinellen Lernens ferner für mindestens einen gegebenen Konturpunkt der genannten Menge von Konturpunkten, die der genannten Parametrisierung des genannten mindestens einen Objekts und/oder des genannten mindestens einen charakteristischen Bereichs entspricht, eine Sichtbarkeitsinformation bestimmt, die angibt, ob der gegebene Konturpunkt sichtbar ist oder ob er durch das genannte gegebene Gesicht verdeckt ist.

9. Verfahren zur Detektion und Modellierung nach einem der Ansprüche 6 bis 8, wobei das genannte mindestens eine Bild eine Vielzahl von Bildern umfasst, die jeweils eine unterschiedliche Ansicht des genannten mindestens einen Objekts und/oder des genannten mindestens einen charakteristischen Bereichs darstellen,
und wobei die genannte Detektion und die genannte Bestimmung für jedes der Bilder der genannten Vielzahl von Bildern gemeinsam umgesetzt werden.

10. Computerprogrammprodukt, das Programmcodeanweisungen zur Umsetzung des Verfahrens nach einem der Ansprüche 1 bis 9 umfasst, wenn das genannte Programm auf einem Computer ausgeführt wird.

11. Vorrichtung zur Detektion und Modellierung mindestens eines in mindestens einem Bild dargestellten Objekts und/oder mindestens eines charakteristischen Bereichs des genannten mindestens einen Bildes,
**dadurch gekennzeichnet, dass** sie mindestens einen Prozessor und/oder mindestens eine dedizierte Rechenmaschine umfasst, die dazu konfiguriert sind, Folgendes zu implementieren:
- ein Erzeugen einer Vielzahl von Augmented-Reality-Bildern, die ein reales Bild und mindestens ein virtuelles Element umfassen, das für das genannte mindestens eine Objekt und/oder den genannten mindestens einen charakteristischen Bereich repräsentativ ist;
- ein Erhalten von Lernsinformationen für jedes Augmented-Reality-Bild, wobei die Lerninformationen für mindestens ein gegebenes virtuelles Element des genannten Augmented-Reality-Bildes Folgendes umfassen:
- ein Segmentierungsmodell des gegebenen virtuellen Elements, das aus dem genannten gegebenen virtuellen Element erhalten wird, und
- entweder eine Menge von Konturpunkten, die einer Parametrisierung des gegebenen virtuellen Elements entspricht, oder die genannte Parametrisierung, erhalten aus dem genannten gegebenen virtuellen Element; und
- ein Lerne auf der Grundlage der Vielzahl von Augmented-Reality-Bildern und der genannten Lerninformationen, wodurch ein Parametersatz bereitgestellt wird, der das genannte System des maschinellen Lernens in die Lage versetzt, das genannte mindestens eine Objekt und/oder den genannten mindestens einen charakteristischen Bereich in mindestens einem gegebenen Bild zu detektieren und entsprechende Modellierungsinformationen zu bestimmen, die Folgendes umfassen:
- ein Segmentierungsmodell des genannten mindestens einen Objekts und/oder des genannten mindestens einen charakteristischen Bereichs, und
- entweder eine Menge von Konturpunkten, die einer Parametrisierung des genannten mindestens einen Objekts und/oder des genannten mindestens einen charakteristischen Bereichs entspricht, oder die genannte Parametrisierung.

## Claims

1. A method for learning a machine learning system for detecting and modeling at least one object represented in at least one given image and/or at least one characteristic region of said at least one given image,
**characterized in that** said machine learning system performs:
- generating a plurality of augmented reality images comprising a real image and at least one virtual element representative of said at least one object and/or of said at least one characteristic region;
- obtaining, for each augmented reality image, learning information comprising, for at least one given virtual element of said augmented reality image:
- a segmentation model of the given virtual element obtained from said given virtual element, and
- either a set of contour points corresponding to a parametrization of the given virtual element, or said parametrization, obtained from said given virtual element; and
- learning from the plurality of augmented reality images and said learning information, delivering a set of parameters enabling said machine learning system to detect said at least one object and/or said at least one characteristic region in said at least one given image and to determine corresponding modeling information comprising:
- a segmentation model of said at least one object and/or of said at least one characteristic region, and
- either a set of contour points corresponding to a parametrization of said at least one object and/or of said at least one characteristic region, or said parametrization.

2. The learning method according to claim 1 wherein, for each augmented reality image, said learning of said machine learning system comprises joint learning from, on the one hand, said segmentation model of the given virtual element and, on the other hand, said set of contour points corresponding to a parameterization of the given virtual element.

3. The learning method according to claim 2, wherein said joint learning implements a cost function dependent on a linear combination between, on the one hand, a cross-entropy associated with said segmentation model of the given virtual element and, on the other hand, a Euclidean distance associated with said set of contour points corresponding to a parametrization of the given virtual element.

4. The learning method according to any one of claims 1 to 3, wherein said real image comprises the illustration of a face,
and wherein said learning information comprises, for at least one contour point of said set of contour points corresponding to a parametrization of the given virtual element, visibility information indicating whether the contour point is visible or whether it is concealed by said face.

5. The learning method according to claim 4 when dependent on claim 2, wherein said cost function further depends on a binary cross-entropy associated with the visibility of said contour point.

6. A method for detecting and modeling at least one object represented in at least one image and/or at least one characteristic region of said at least one image,
**characterized in that** a machine learning system, trained by implementing the learning method according to any one of claims 1 to 5, performs a detection of said at least one object and/or of said at least one characteristic region in said at least one image and performs a determination of the modeling information of said at least one object and/or of said at least one characteristic region.

7. The detection and modeling method according to claim 6, wherein said machine learning system is trained by implementing the learning method according to claim 2 or according to any one of claims 3 to 5 as dependent on claim 2,
and wherein said determination comprises a joint determination:
- of said segmentation model of said at least one object and/or of said at least one characteristic region; and
- of said set of contour points corresponding to said parametrization of said at least one object and/or of said at least one characteristic region.

8. The detection and modeling method according to any one of claims 6 to 7, wherein said machine learning system is trained by implementing the learning method according to claim 4 or 5 as dependent on claim 4, wherein said at least one image comprises the representation of a given face, and wherein said machine learning system further determines, for at least one given contour point of said set of contour points corresponding to said parametrization of said at least one object and/or of said at least one characteristic region, visibility information indicating whether the given contour point is visible or whether it is concealed by said given face.

9. The detection and modeling method according to any one of claims 6 to 8, wherein said at least one image comprises a plurality of images each representing a different view of said at least one object and/or of said at least one characteristic region, and wherein said detection and said determination are implemented jointly for each of said plurality of images.

10. Computer program product comprising program code instructions for implementing the method according to any of claims 1 to 9, when said program is executed on a computer.

11. A device for detecting and modeling at least one object represented in at least one image and/or at least one characteristic region of said at least one image,
**characterized in that** it comprises at least one processor and/or at least one dedicated computing machine configured to implement:
- generating a plurality of augmented reality images comprising a real image and at least one virtual element representative of said at least one object and/or of said at least one characteristic region;
- obtaining, for each augmented reality image, learning information comprising, for at least one given virtual element of said augmented reality image:
- a segmentation model of the given virtual element obtained from said given virtual element, and
- either a set of contour points corresponding to a parametrization of the given virtual element, or said parametrization, obtained from said given virtual element; and
- learning from the plurality of augmented reality images and said learning information, delivering a set of parameters enabling said machine learning system to detect said at least one object and/or said at least one characteristic region in at least one given image and to determine corresponding modeling information comprising:
- a segmentation model of said at least one object and/or of said at least one characteristic region, and
- either a set of contour points corresponding to a parametrization of said at least one object and/or of said at least one characteristic region, or said parametrization.
